# EUROPEAN PATENT SPECIFICATION

(11) **EP 2 097 717 B1**
(45) Date of publication and mention of the grant of the patent: **23.08.2017**
(21) Application number: 07864135.4
(22) Date of filing: 08.11.2007
(51) Int. Cl.: H04L 29/08, G01C 21/26, G01C 21/32, H04M 1/725, H04W 4/02

(54) **LOCAL CACHING OF MAP DATA BASED ON CARRIER COVERAGE DATA**
LOKALE ZWISCHENSPEICHERUNG VON KARTENDATEN AUF DER BASIS VON TRÄGERABDECKUNGSDATEN
MISE EN MÉMOIRE CACHE LOCALE DE DONNÉES CARTOGRAPHIQUES SUR LA BASE DE DONNER DE COUVERTURE DE PORTEUSE

(30) Priority: 05.12.2006 US 634364
(43) Date of publication of application: 09.09.2009
(73) Proprietor: QUALCOMM Incorporated, San Diego, CA 92121-1714 (US)
(72) Inventor: HAMILTON, Craig C., Sunnyvale, California 94089 (US)
(74) Representative: Potter, Julian Mark
(86) International application number: PCT/US2007/084119
(87) International publication number: WO 2008/070400

(56) References cited:
- US-A1- 2004 203 998
- US-A1- 2004 242 240
- US-A1- 2005 272 444
- US-A1- 2006 270 412

## Description

### BACKGROUND

The present application claims priority to U.S. Publication No. US2008/0132249 A1 entitled "Local Caching of Map Data Based on Carrier Coverage Data" filed on December 5, 2006.

Mobile telephones come with various features including the ability to provide directions via a navigation function. Mobile telephones provide directions using either audio commands, visual commands or a combination of audio and visual commands.

The user can obtain directions via the navigation function inside a mobile telephone provider's wireless network coverage area. The user enters a destination and requests directions to this destination from a service provider's server. The server determines the location of the mobile telephone. The location of the mobile telephone is used as a proxy for the location of the user. After determining the location of the mobile telephone, the server calculates a route to the destination. The server downloads a temporary map and navigational instructions to the mobile telephone. The mobile telephone communicates the navigational commands to the user along the navigational path.

However, outside of the mobile telephone provider's wireless network coverage area, the navigation functionality of the mobile telephone is inoperable. A user is unlikely to be familiar with an area outside their mobile telephone provider's wireless network coverage area. Consequently, the mobile telephone navigational function is inoperable at the time when the user has a need for this functionality.

There is a need for a system and method for improving mobile telephone navigation functionality outside of the mobile telephone provider's wireless network coverage area.

The teachings herein extend to those embodiments which are within the scope of the appended claims, regardless of whether they accomplish one or more of the above-mentioned needs.

US2004/023998 A1, discloses an embodiment in which the location of a mobile device and a direction in which the mobile device is moving are determined. Communications service changes for the mobile device are anticipated based at least in part on the location of the mobile device and direction in which the mobile device is moving. US2004/0242240 A1 discloses methods and devices for automatically setting the communications mode of a wireless device based upon stored data defining the geographic coverage regions of a number or communications systems. In one method, there is received from a coverage server data describing a plurality of geographic regions and any communications modes available in each of the geographic regions. A present geographic location of the wireless communications device is determined, and the geographic region that contains the present geographic location is determined as a current region. The communications mode of the wireless communications device is set based upon the data describing the current region that is stored in the wireless communications device. Thus, the data can be centrally managed and updated at the coverage server. In preferred embodiments, the data includes many communications modes, including cellular and Wireless LAN modes. US2005/0272444 A1 discloses a method for directing users to coverage. The method includes the steps of detecting when a signal strength parameter of a mobile unit falls below a predetermined threshold, acquiring positional information about the mobile unit and directing a user of the mobile unit to a reestablishing coverage area that has a signal strength that would cause the signal strength parameter to meet the predetermined threshold. In addition, the method can include the step of calculating positional parameters between the mobile unit and the reestablishing coverage area in which the reestablishing coverage area is a coverage area that is physically closest to the mobile unit in comparison to other coverage areas.

The invention is directed to the mobile computing device of claim 1, the method of claim 9, the computer program of claim 11 and the computer program carrier medium of claim 12. Advantageous embodiments are to be found in the dependent claims.

### BRIEF DESCRIPTION OF THE DRAWINGS

FIG. 1 is a front view of a mobile computing device, according to an exemplary embodiment;
FIG. 2 is a back view of a mobile computing device, according to an exemplary embodiment;
FIG. 3 is a block diagram of the mobile computing device of FIGS. 1 and 2, according to an exemplary embodiment;
FIG. 4 is a global illustration of a wireless network coverage area, according to an exemplary embodiment;
FIG. 5 is a local illustration of a wireless network coverage area, according to an exemplary embodiment;
FIG. 6 is a high level flowchart of a method of providing navigation functionality in a transition zone via a mobile computing device, according to an exemplary embodiment;
FIG. 7 is a high level flowchart of a method of providing navigation functionality in a no service zone, according to an exemplary embodiment;
FIGS. 8-11 are flowcharts of a method of providing navigation functionality via a mobile computing device, according to an exemplary embodiment;
FIG. 12 is an illustration of a method of providing navigation functionality via a mobile computing device in a transition zone, according to an exemplary embodiment; and
FIG. 13 is an illustration of a method of providing navigation functionality via a mobile computing device outside of a wireless network coverage area, according to an exemplary embodiment.

### DETAILED DESCRIPTION OF EXEMPLARY EMBODIMENTS

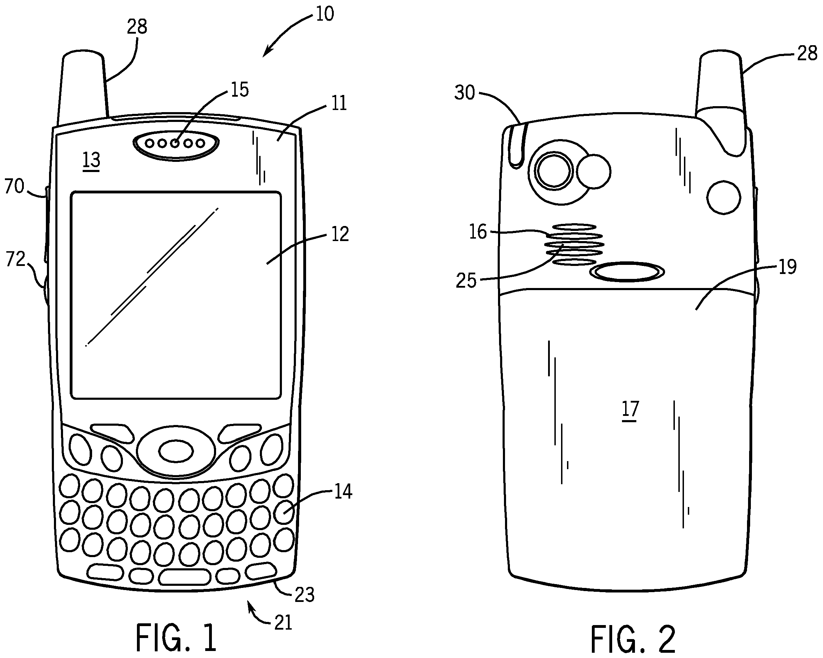

Referring first to FIG. 1, a mobile computing device 10 is shown. Mobile computing device 10 is a smart phone, which is a combination mobile telephone and handheld computer having personal digital assistant functionality. The teachings herein can be applied to other mobile computing devices (e.g., a laptop computer) or other electronic devices. Personal digital assistant functionality can comprise one or more of personal information management, database functions, word processing, spreadsheets, voice memo recording, etc. and is configured to synchronize personal information from one or more applications with a computer (e.g., desktop, laptop, server, etc.). Mobile computing device 10 is further configured to receive and operate additional applications provided to mobile computing device 10 after manufacture (e.g., via wired or wireless download, SecureDigital card, etc.).

Mobile computing device 10 comprises a display 12 and a user input device 14 (e.g., a QWERTY keyboard, buttons, touch screen, speech recognition engine, etc.). Mobile computing device 10 also comprises an earpiece speaker 15. Earpiece speaker 15 may be a speaker configured to provide audio output with a volume suitable for a user placing earpiece speaker 15 against or near the ear. Earpiece speaker 15 may be part of an electrodynamic receiver such as part number 419523 manufactured by Foster Electric Co., Ltd., Japan. Earpiece speaker 15 may be positioned above display 12 or in another location on mobile computing device 10. Mobile computing device 10 comprises a housing 11 having a front side 13 and a back side 17 (FIG. 2). Earpiece speaker 15 may be positioned on the front side 13 along with display 12 and user input device 14, and a loudspeaker 16 may be positioned on the back side along with a battery compartment 19. In alternative embodiments, display 12, user input device 14, earpiece speaker 15 and loudspeaker 16 may each be positioned anywhere on front side 13, back side 17 or the edges there between.

Loudspeaker 16 is an electro-acoustic transducer that converts electrical signals into sounds loud enough to be heard at a distance. Loudspeaker 16 is configured to have speakerphone functionality. While loudspeaker 16 may be configured to produce audio output at a plurality of different volumes, it is typically configured to produce audio output at a volume suitable for a user to comfortably hear at some distance from the speaker, such as a few inches to a few feet away. Loudspeaker 16 may be an electrodynamic loudspeaker, such as part number HDR 9164, manufactured by Hosiden Corporation, Osaka, Japan.

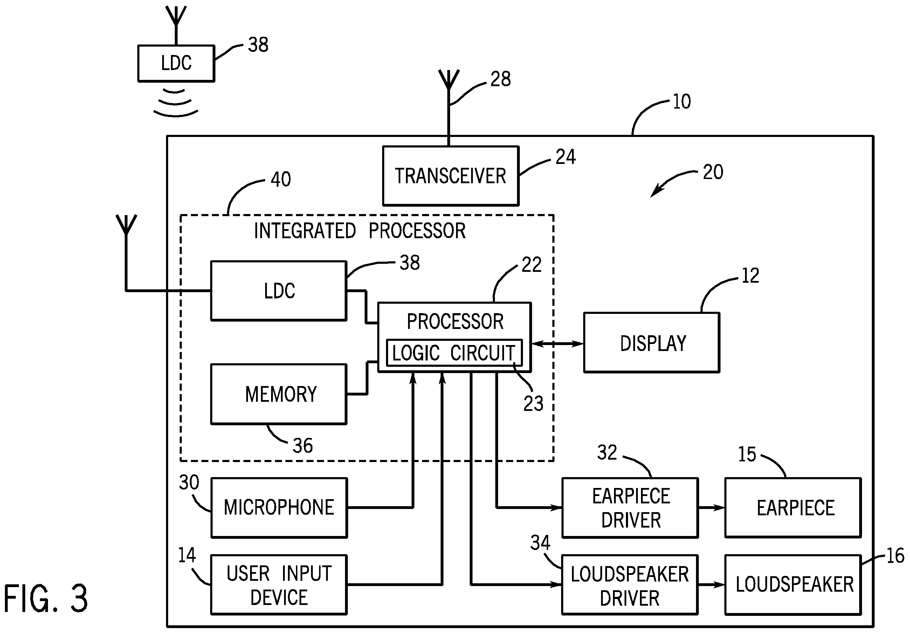

Referring now to FIG. 3, mobile computing device 10 comprises a processing circuit 20 comprising a processor 22. Processor 22 can comprise one or more microprocessors, microcontrollers, and other analog and/or digital circuit components configured to perform the functions described herein. Processor 22 comprises one or more memory chips (e.g., random access memory, read only memory, flash, etc.) configured to store software applications provided during manufacture or subsequent to manufacture by the user or by a distributor of mobile computing device 10. For example, processor 22 may be configured to include a logic circuit 23. In an exemplary embodiment, processor 22 is configured to determine that a destination location is in a no service area 46. In another exemplary embodiment, processor 22 is configured to determine that mobile computing device 10 is proximate to a wireless network coverage area boundary line 52 and to download via mobile computing device 10 additional geographic data based on this determination. In another exemplary embodiment, processor 22 is configured to determine that mobile computing device 10 is proximate to wireless network coverage area boundary line 52 based on a wireless network coverage data and the location mobile computing device's 10 location data. In another exemplary embodiment, processor 22 is configured to determine that mobile computing device 10 is in proximity to wireless network coverage area boundary line 52 based on a wireless network signal strength.

In one embodiment, processor 22 can comprise a first, applications microprocessor configured to run a variety of personal information management applications, such as calendar, contacts, etc., and a second, radio processor on a separate chip or as part of a dual-core chip with the application processor. The radio processor is configured to operate telephony functionality.

Mobile computing device 10 can be configured for cellular radio telephone communication, such as Code Division Multiple Access (CDMA), Global System for Mobile Communications (GSM), Third Generation (3G) systems such as Wide-Band CDMA (WCDMA), or other cellular radio telephone technologies. Mobile computing device 10 can further be configured for data communication functionality, for example, via GSM with General Packet Radio Service (GPRS) systems (GSM/GPRS), CDMA/1XRTT systems, Enhanced Data Rates for Global Evolution (EDGE) systems, Evolution Data Only or Evolution Data Optimized (EV-DO), and/or other data communication technologies.

Mobile computing device 10 includes a transceiver 24 which comprises analog and/or digital electrical components configured to receive and transmit wireless signals via antenna 28 to provide cellular telephone and/or data communications with a fixed wireless access point, such as a cellular telephone tower, in conjunction with a network carrier, such as, Verizon Wireless, Sprint, etc. Mobile computing device 10 can further comprise circuitry to provide communication over a local area network, such as Ethernet or according to an IEEE 802.11x standard, or a personal area network, such as a Bluetooth or infrared communication technology.

Mobile computing device 10 further comprises a microphone 30 configured to receive audio signals, such as voice signals, from a user or other person in the vicinity of mobile computing device 10, typically by way of spoken words. Microphone 30 is configured as an electro-acoustic sense element to provide audio signals from the vicinity of mobile computing device 10 and to convert them to an electrical signal which is provided to processor 22. Processor 22 can store data in memory 36. Memory 36 is configured to store data accessed by mobile computing device 10. For example, memory 36 may store data received from a remote source, data created by processor 22 that may be used later, intermediate data of use in current calculation, or any other data of use by mobile computing device 10. Memory 36 includes both volatile memory and non-volatile memory. Volatile memory may be configured so that the contents stored therein may be erased during each power cycle of mobile computing device 10. Non-volatile memory may be configured so that the contents stored therein may be retained across power cycles, such that upon mobile computing device 10 power-up, data from previous system use remains available for the user. According to an exemplary embodiment, remote source may be any device that includes a transceiver and is able to interface with mobile computing device 10 over communications link (either wireless or wired). In various exemplary embodiments, remote source may be one or more of a mobile phone, a personal digital assistant (PDA), a media player, a personal navigation device (PND), a remote server that may be coupled to the Internet, a computer, a personal computer, a networked storage drive, or various other remote sources. Remote source may have a memory or data storage device, one or more processing devices, and one or more communications devices. In an exemplary embodiment, a wireless network coverage area 44 and geographic data may be stored in memory 36. The geographic data may be a first map data (78, 80, 82), a second map data (66, 74, 76), a street data, a map data encompassing a first geographic area 56, a map data encompassing a second geographic area 58 and a map data encompassing a third geographic area 60 Street data is map data corresponding to street locations, which can be high level street data or lower level street data for the geographic area. High level street data is the main streets or routes used by drivers. Lower level street data is secondary streets or routes used by drivers.

Processor 22 communicates with a location determination circuit 38 to enable processor 22 to determine the location of mobile computing device 10. Location determination circuit 38 can be internal to mobile computing device 10. Location determination circuit 38 can also be external to mobile computing device 10 and configured to wirelessly communicate with mobile computing device 10. In various embodiments, mobile computing device 10 may comprise position determination capabilities. Mobile computing device 10 may employ one or more position determination techniques including, for example, Global Positioning System (GPS) techniques, Cell Global Identity (CGI) techniques, CGI including timing advance (TA) techniques, Enhanced Forward Link Trilateration (EFLT) techniques, Time Difference of Arrival (TDOA) techniques, Angle of Arrival (AOA) techniques, Advanced Forward Link Trilateration (AFTL) techniques, Observed Time Difference of Arrival (OTDOA), Enhanced Observed Time Difference (EOTD) techniques, Assisted GPS (AGPS) techniques, hybrid techniques (e.g., GPS/CGI, AGPS/CGI, GPS/AFTL or AGPS/AFTL for CDMA networks, GPS/EOTD or AGPS/EOTD for GSM/GPRS networks, GPS/OTDOA or AGPS/OTDOA for UMTS networks), and so forth. In an exemplary embodiment, processor 22, location determination circuit 38 and memory 36 can be combined in an integrated processor 40.

Processor 22 can determine that mobile computing device 10 and/or a destination location is in wireless network coverage area 44, a transition zone 50, no service area 46 and download to mobile computing device 10 geographic data and/or points of interest based on the determination. Processor 22 can provide a digital memo recorder function or wireless telephone function via words spoken into microphone 30. Processor 22 may also provide speech recognition and/or voice control of features operable on mobile computing device 10. Display 12 can comprise a touch screen display in order to provide user input to processor 22 to control functions, such as to enter destination location, dial a telephone number, enable/disable speakerphone audio, provide user inputs regarding increasing or decreasing the volume of the audio provided through earpiece speaker 15 and/or loudspeaker 16, etc. Alternatively, or in addition, user input device 14 can provide similar inputs to those of a touch screen display 12. Mobile computing device 10 can further comprise a stylus to assist the user in making selections on display 12. Processor 22 can further be configured to provide video conferencing capabilities by displaying on display 12 video from a remote participant to a video conference, by providing a video camera on mobile computing device 10 for providing images to the remote participant or, by providing text messaging, two-way audio streaming in full- and/or half-duplex mode, etc.

Referring again to FIG. 3, an earpiece driver circuit 32 and a loudspeaker driver circuit 34 are provided, which may comprise analog and/or digital circuitry configured to receive audio data from processor 22 and to provide filtering, signal processing, equalizer functions, or other audio signal processing steps to audio data. For example, the incoming audio data can comprise one or more of a downlink signal received by transceiver 24 from a remote participant to a telephone call or a video conference, prerecorded audio, or audio from a game, or navigation application (e.g., turn-by-turn directions) or audio file stored on mobile computing device 10, etc. Drivers 32, 34 may then provide the audio data to earpiece speaker 15 and/or loudspeaker 16 to provide the audio to a user or another person in the vicinity of mobile computing device 10. Drivers 32, 34 may be part no. TPA6203A1, manufactured by Texas Instruments Inc., Dallas, Texas.

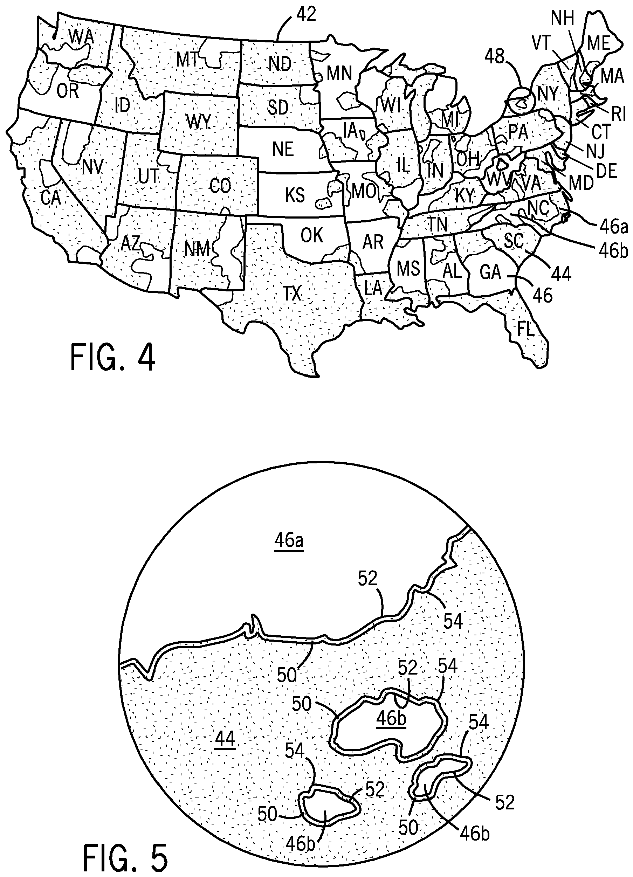

Referring to FIG. 4, a map of an United States 42 is shown. A person that wants to utilize a mobile phone to receive and transmit wireless signals via their telephone and/or data communications with a fixed wireless access point, such as a cellular telephone tower, typically contracts to have a wireless network coverage company provide wireless network coverage to enable their phone to communicate with other devices. The mobile phone can also communicate over a local area network, such as Ethernet or according to an IEEE 802.11x standard or a personal area network, such as a Bluetooth or infrared communication technology.

The wireless network coverage companies typically have wireless network coverage area 44 that is limited to less than the entire United States 42. In a typical wireless network coverage area 44 there will be "no service" areas 46. These no service areas 46 can be an external no service area 46a or can be an internal no service area 46b. A person that wants to use their mobile phone to make a phone call, obtain navigational directions, text messaging or connect to the internet will be unable to complete these transactions in any of these no service areas 46. An exemplary local wireless network coverage area 48 will be used for illustration purposes.

Local wireless network coverage area 48 is shown in FIG. 5. In an exemplary embodiment, local wireless network coverage area 48 has no service areas 46 of varying size. A persons that enters these no service areas 46 will be unable to utilize telephone and/or data communication functions on their mobile phone. In a typical example, a person would not know in advance where wireless network coverage area 44 ends and no service area 46 begins.

In the present exemplary embodiment, local wireless network coverage area 48 comprises no service areas 46, transition zones 50 and wireless network coverage area boundary lines 52. Transition zones 50 are areas that surround no service areas 46. The size of transition zones 50 can be preprogrammed into mobile computing device 10 or the server. Alternatively, the size of transition zones 50 can be customized for each user. In an exemplary embodiment, the size of transition zones 50 could be measured in miles from wireless network coverage area boundary lines 52. Transition zones 50 or wireless network coverage area boundary lines 52 could be used as a proxy to determine when the user might leave wireless network coverage area 44. This would allow mobile computing device 10 to download navigational maps before leaving wireless network coverage area 44.

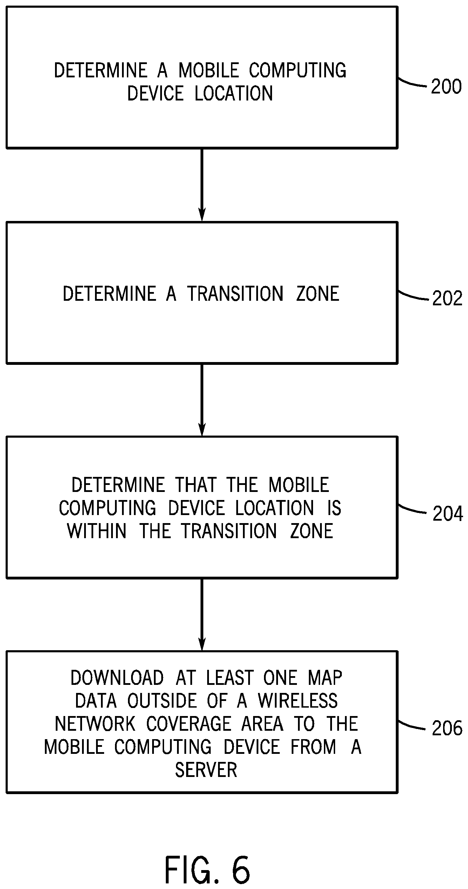

Referring to FIG. 6, a high level flowchart of an exemplary method of providing navigation functionality in transition zone 50 via mobile computing device 10 is shown. In step 200, the location of mobile computing device 10 is calculated. In step 202, transition zones 50 are determined. In step 204, the location of mobile computing device 10 is compared to transition zones 50 to determine that mobile computing device 10 is within transition zone 50. In step 206, mobile computing device downloads at least one map data outside of wireless network coverage area 44 from the server. In exemplary embodiments, the location of mobile computing device 10, the location of transition zones 50 and/or the comparison of mobile computing device 10 with transition zones 50 can be accomplished internally to mobile computing device 10 or externally (i.e., server).

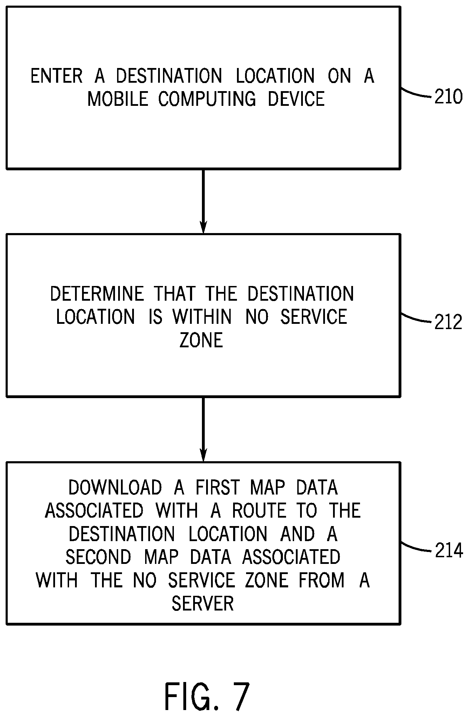

Referring to FIG. 7, a high level flowchart of an exemplary method of providing navigation functionality in no service zone 46 is shown. In step 210, a destination location is entered on mobile computing device 10. In step 212, the destination location is determined to be within no service zone 46. In step 214, mobile computing device 10 downloads a first map data (78, 80, 82) associated with a route to the destination and a second map data (66, 74, 76) associated with no service area 46 from the server.

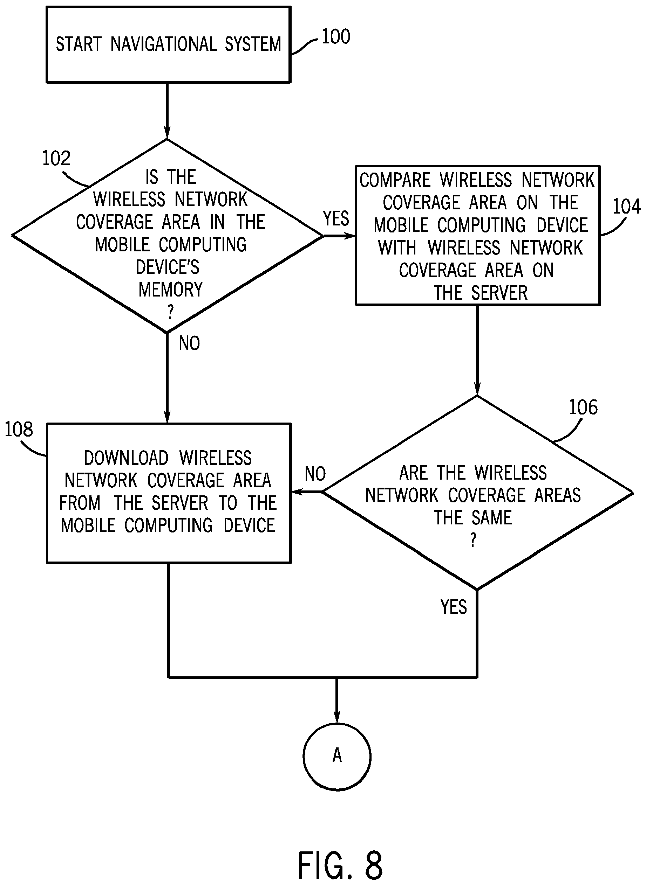

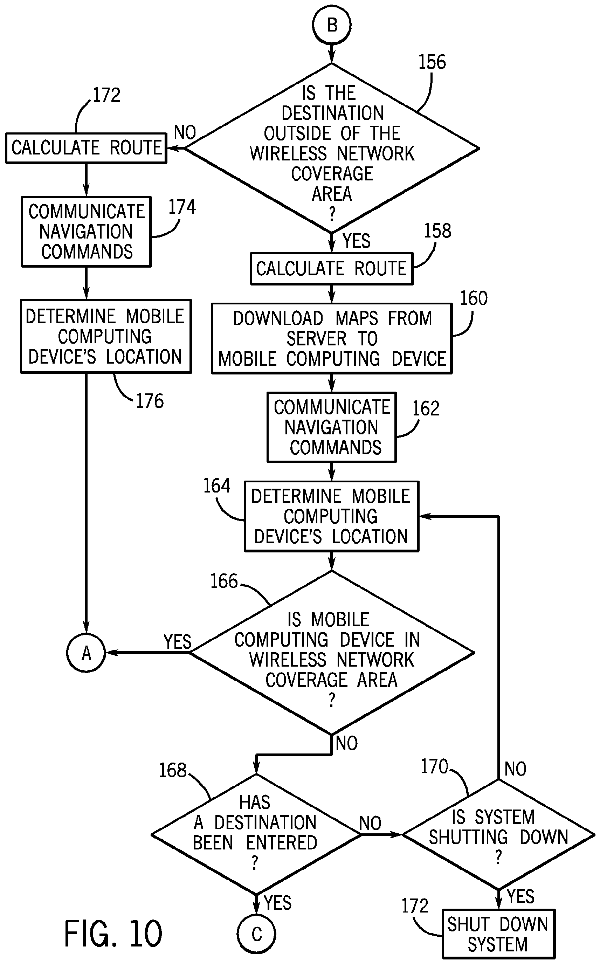

Referring to FIGS. 8-11, flowcharts for a method of providing navigation functionality via mobile computing device 10 are shown. In an exemplary embodiment, mobile computing device's 10 navigational system is started at step 100. In step 102, mobile computing device 10 determines whether wireless network coverage area 44 is installed on mobile computing device 10. If wireless network coverage area 44 is not installed on mobile computing device 10, then in step 108, mobile computing device 10 downloads at least a portion of wireless network coverage area 44 from the server. Alternatively, mobile computing device 10 could be configured to continually download relevant portions of wireless network coverage area 44 from the server. The relevant portions would be a specified radius around the user's present location or from logic circuit 23 that learns the habits of the user and predicts the required geographic region to download.

If the wireless network coverage area is installed on mobile computing device 10, then in step 104, wireless network coverage area 44 on mobile computing device 10 is compared to wireless network coverage area 44 on the server. In step 106, the comparison results are analyzed. If wireless network coverage area 44 on mobile computing device 10 is the same as wireless network coverage area 44 on the server, the start up routine for the system has been completed. If wireless network coverage area 44 on mobile computing device 10 is not the same as wireless network coverage area 44 on the server, then in step 108, mobile computing device 10 downloads wireless network coverage area 44 from the server which completes the start up routine.

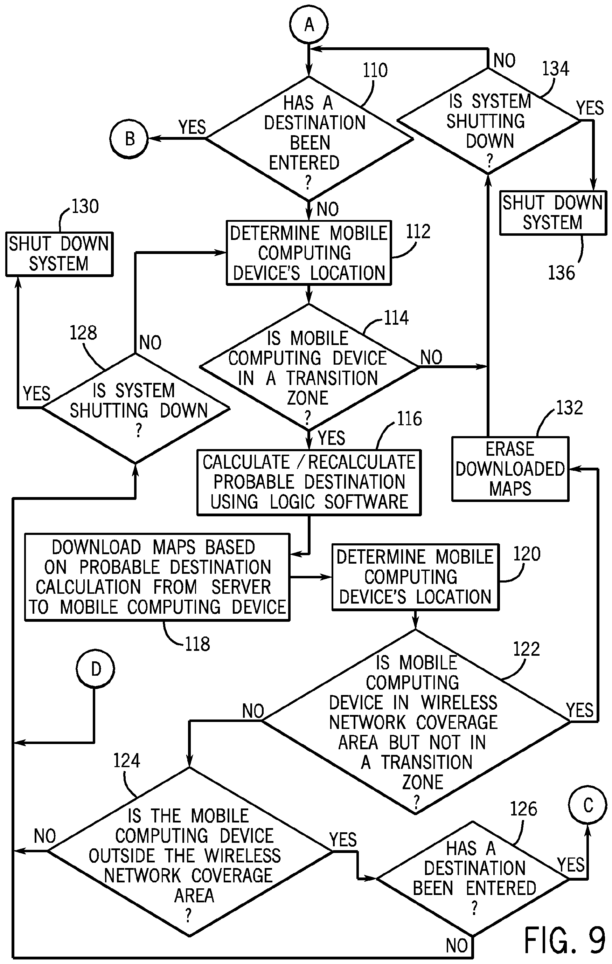

Referring to FIGS. 9-10, step 110 shows that mobile computing device 10 determines whether a destination has been entered. If a destination has been entered, then in step 156, mobile computing device 10 or the server calculates the destination location and compares the destination location with wireless network coverage area 44. If the destination location is inside wireless network coverage area 44, then in step 172, the navigation logic calculates the route and navigational commands to the destination. The route and navigational commands are downloaded from the server to mobile computing device 10. Alternatively, route and/or navigational commands may be provided by a navigation application and geographic information database stored on mobile computing device 10. The route and navigational commands may be accessed from mobile computing device 10 via memory 36 or a plug-in module. Mobile computing device 10 transmits these navigation commands to the user in step 174. In an exemplary embodiment, the navigational commands could be audio signals, visual signals or a combination of both audio and visual signals. In addition, mobile computing device 10 is configured to download and/or retrieve from memory 36 points of interest. Points of interest include restaurants, shops, businesses, entertainment locations, the addresses of friends and the addresses of business contacts. These points of interest can be generic or customized to the user. The points of interest downloaded from the server and/or retrieved from memory 36 may vary depending on specified criteria (i.e., day, time of day, season, weather, etc.). In an exemplary embodiment, a user may want to have points of interest related to dining only at certain times of the day (i.e., breakfast time, lunch time or dinner time). Processor 22 can be configured to retrieve points of interest from memory 36 or the server based on any specified criteria. In step 176, the location of mobile computing device 10 is calculated. After step 176 is completed, the system returns to step 110.

If the destination location is outside of wireless network coverage area 44, then in step 158, the navigation logic calculates the route and navigational commands to the destination using either an on-board or off-board resources, or a combination thereof. In step 160, mobile computing device 10 downloads first map data (78, 80, 82) associated with a route to the destination location along with second map data (66, 74, 76) associated with no service zone 46. In an exemplary embodiment, first map data (78, 80, 82) associated with a route to the destination location are utilized to provide navigational routes and commands to the destination that are requested while mobile computing device 10 is within wireless network coverage area 44. Second map data (66, 74, 76) associated with no service zone 46 are utilized to provide navigational directions to destinations that are requested while mobile computing device 10 is outside of wireless network coverage area 44. In addition, mobile computing device 10 is configured to download points of interest. Mobile computing device 10 transmits these navigation commands to the user in step 162.

In step 164, the location of mobile computing device 10 is calculated. In step 166, the location calculation results are analyzed to determine whether mobile computing device 10 is in wireless network coverage area 44. If mobile computing device 10 is in wireless network coverage area 44, the system returns to step 110.

If mobile computing device 10 is not in wireless network coverage area 44, then in step 168, mobile computing device 10 determines whether a destination has been entered. If a destination has been entered, the system returns to step 138. If a destination has not been entered, then mobile computing device 10 queries whether it is being shut down in step 170. If mobile computing device 10 is being shut down, then in step 172, mobile computing device 10 is turned off. If mobile computing device 10 is not being shut down, the system returns to step 164.

If a destination has not been entered, then in step 112, the location of mobile computing device 10 is calculated. In step 114, the location calculation results are analyzed to determine whether mobile computing device 10 is in transition zone 50. If mobile computing device 10 is not in transition zone 50, then in step 134, mobile computing device 10 queries whether it is being shut down. If mobile computing device 10 is being shut down, then in step 136, mobile computing device 10 is turned off. If mobile computing device 10 is not being shut down, the system returns to step 110.

If mobile computing device 10 is in transition zone 50, then in step 116, logic circuit 23 calculates/recalculates the user's probable destination. In an exemplary embodiment, logic circuit 23 could be a learning program that predicts the current travel plans from past travel patterns. In another exemplary embodiment, logic circuit 23 could use wireless network coverage area 44 signal strength to calculate the probability that the user's destination and/or the user will be outside of wireless network coverage area 44. In this exemplary embodiment, wireless network coverage area 44 signal strength is used as a proxy for wireless network coverage area boundary line 52. In another exemplary embodiment, logic circuit 23 could use a predetermined radius around the user's probable exit point from wireless network coverage area 44 to determine the user's probable destination. In another exemplary embodiment, processor 22 is configured to determine mobile computing device 10 is in transition zone 50 based on logic circuit's 23 course prediction which may be based on at least one past location data. In another exemplary embodiment, logic circuit 23 can determine the geographic data that may be downloaded. Logic circuit 23 and/or logic circuit's 23 calculations can be located on mobile computing device 10, accessed from a plug-in module, or downloaded from a server or a combination thereof.

In step 118, mobile computing device 10 retrieves map data based on logic circuit's 23 probability destination calculation. In step 120, the location of mobile computing device 10 is calculated. In step 122, the location calculation results are analyzed to determine whether mobile computing device 10 is in wireless network coverage area 44 but not in transition zone 50. If mobile computing device 10 is in wireless network coverage area 44 but not in transition zone 50, then in step 132, mobile computing device 10 may be configured to erase the downloaded map data to conserve memory 36. After completing step 132, the system returns to step 134.

If mobile computing device 10 is not in wireless network coverage area 44 but not in transition zone 50, then in step 124, the location calculation results determined in step 120 are analyzed to determine whether mobile computing device 10 is outside wireless network coverage area 44. If mobile computing device 10 is not outside wireless network coverage area 44, then in step 128, mobile computing device 10 queries whether it is being shut down. If mobile computing device 10 is being shut down, then in step 130, mobile computing device 10 is turned off. If mobile computing device 10 is not being shut down, the system returns to step 112.

If mobile computing device 10 is outside wireless network coverage area 44, then in step 126, mobile computing device 10 determines whether a destination has been entered. If a destination has not been entered, the system returns to step 128.

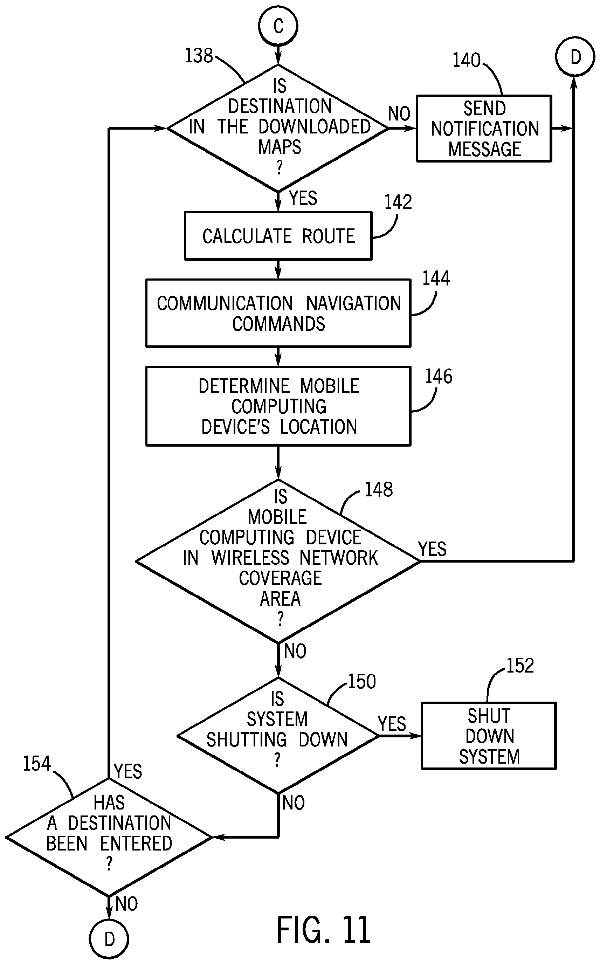

Referring to FIG. 11, if a destination has been entered, then in step 138, mobile computing device 10 calculates the destination location and compares the destination location with the data from the downloaded map data. If the destination is not within the downloaded map data, then in step 140, mobile computing device 10 notifies the user that the destination location is not within the downloaded map data and navigational commands cannot be delivered to the user. After the notification is sent, the system returns to step 128.

If the destination is within the downloaded map data, then in step 142, the navigation logic calculates the route and navigational commands to the destination. Mobile computing device 10 transmits these navigation commands to the user in step 144. In an exemplary embodiment, the navigational commands could be audio signals provided via loudspeaker 16, earpiece speaker 15, or another audio output device, visual signals provided via display 12 or a combination thereof.

In step 146, the location of mobile computing device 10 is calculated. In step 148, the location calculation results are analyzed to determine whether mobile computing device 10 is in wireless network coverage area 44. If mobile computing device 10 is in wireless network coverage area 44, then the system returns to step 128 (FIG. 9).

If mobile computing device 10 is not within wireless network coverage area 44, then in step 150, mobile computing device 10 queries whether it is being shut down. If mobile computing device 10 is being shut down, then in step 152, mobile computing device 10 is turned off. If mobile computing device 10 is not being shut down, then in step 154, mobile computing device 10 determines whether a destination has been entered. If a destination has been entered, the system returns to step 138. If a destination has not been entered, the system returns to step 128 (FIG. 9).

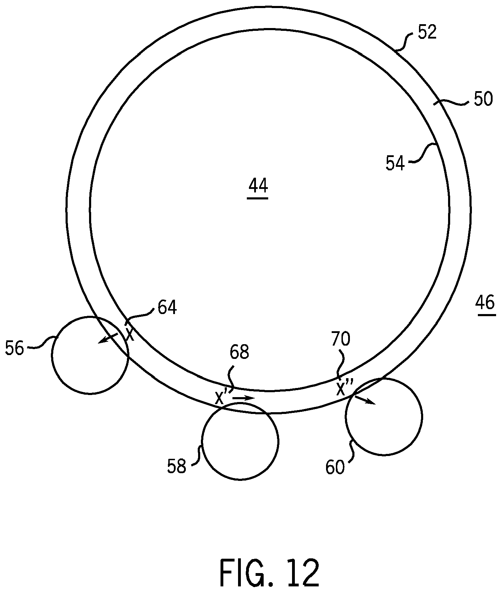

FIG. 12 shows an illustration of a method of providing navigation functionality via mobile computing device 10 in transition zone 50. Wireless network coverage area 44 has wireless network coverage area boundary line 52. Wireless network coverage area boundary line 52 is the point where wireless network coverage area 44 stops and no service area 46 begins. Wireless coverage area boundary line 52 may be a transition zone primary boundary line. Wireless coverage area boundary line 52 is utilized as an anchor to determine a transition zone secondary boundary line 54. Transition zone secondary boundary line 54 is a predetermined or varying distance from wireless network coverage area boundary line 52. Mobile computing device 10 determine wireless coverage area boundary line 52 from geographic data or from the wireless network's signal strength. Alternatively, the server and/or a plug-in module can determine wireless coverage area boundary line 52 and transmit this data to mobile computing device 10.

In an exemplary embodiment, mobile computing device 10 is in a first location 64 in transition zone 50. Mobile computing device 10 is in close proximity to transition zone secondary boundary line 54. Logic circuit 23 predicts the travel path of mobile computing device 10 and predicts where mobile computing device 10 will enter no service zone 46. Mobile computing device 10 downloads map data encompassing a first geographic area 56 based on logic circuit's 23 prediction. However, mobile computing device 10 does not enter no service zone 46 and continues in transition zone 50.

Mobile computing device 10 moves to a second location 68 which is in the middle of transition zone 50. Logic circuit 23 recalibrates/recalculates (step 116) the predicted travel path of mobile computing device 10. Also, logic circuit 23 recalibrates/recalculates the predicted entry point to no service zone 46. Mobile computing device 10 downloads map data encompassing a second geographic area 58 based on logic circuit's 23 predictions. However, mobile computing device 10 does not enter no service zone 46 and continues in transition zone 50.

Mobile computing device 10 moves to a third location 70 which is on wireless network coverage area boundary line 52. Logic circuit 23 recalibrates/recalculates (step 116) the predicted travel path of mobile computing device 10. Logic circuit 23 also recalibrates/recalculates the predicted entry point to no service zone 46. Mobile computing device 10 downloads map data encompassing a third geographic area 60 based on logic circuit's 23 predictions. Mobile computing device 10 enters no service area 46 and can utilize map data encompassing third geographic area 60 to navigate. In an exemplary embodiment, map data encompassing a geographic area (56, 58, 60) may be retrieved from mobile computing device 10 or a plug-in module.

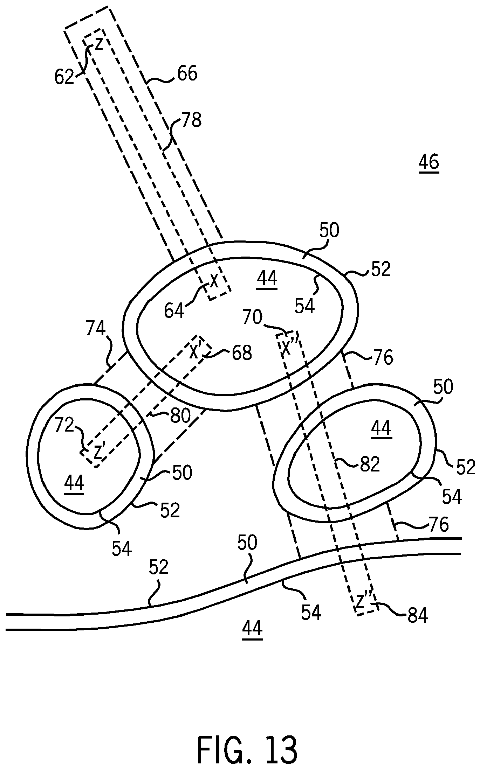

FIG. 13 shows an illustration of a method of providing navigation functionality via mobile computing device 10 outside of wireless network coverage area 44. In this exemplary embodiment, there are various wireless network coverage areas 44. Wireless network coverage areas 44 have transition zones 50, wireless network coverage area boundary lines 52 and transition zone secondary boundary lines 54. In an exemplary embodiment, mobile computing device 10 is at a first location 64. The user enters in a first destination location 62 that is outside of wireless network coverage area 44. The navigation logic calculates the route and navigational commands to the destination. Mobile computing device 10 downloads first map data 78 associated with a route to the destination location along with second map data 66 associated with the no service zone 46 from the server. First map data 78 associated with a route to the destination location are utilized to provide navigational directions to the destination. Second map data 66 associated with no service zone 46 are utilized to provide navigational directions to new destinations that are requested while mobile computing device 10 is outside wireless network coverage area 44. In this embodiment, second map data 66 outline first map data 78 because first destination location 62 is a significant distance from wireless network coverage area 44. This exemplary embodiment could be used to reduce memory 36 requirements.

In an exemplary embodiment, mobile computing device 10 is at a second location 68. The user enters in a second destination location 72 that is inside wireless network coverage area 44 but requires mobile computing device 10 to enter no service area 46. The navigation logic calculates the route and navigational commands to the destination. Mobile computing device 10 downloads first map data 80 to the destination along with second map data 74 from the server. First map data 80 are utilized to provide navigational directions to the destination and second map data 74 are utilized to provide navigational directions to new destinations that are requested while mobile computing device 10 is outside wireless network coverage area 44. In this embodiment, second map data 74 encompass a larger area outside of wireless network coverage area 44 because the travel path outside wireless network coverage area 44 is shorter then in the first example.

In an exemplary embodiment, mobile computing device 10 is at a third location 70. The user enters in a third destination location 84 that is inside wireless network coverage area 44 but requires mobile computing device 10 to enter no service area 46, reenter wireless network coverage area 44, enter another no service area 46 and reenter wireless network coverage area 44. The navigation logic calculates the route and navigational commands to the destination. Mobile computing device 10 downloads first map data 82 to the destination along with second map data 76 from the server. First map data 82 are utilized to provide navigational directions to the destination and second map data 76 are utilized to provide navigational directions to new destinations that are requested while mobile computing device 10 is outside wireless network coverage area 44. In this embodiment, second map data 76 encompass a larger area outside of wireless network coverage area 44 because the travel path outside wireless network coverage area 44 is shorter then in the first example. In an exemplary embodiment, first map data 82 and second map data 76 may be retrieved from mobile computing device 10 or a plug-in module.

While the exemplary embodiments illustrated in the figures and described above are presently exemplary, it should be understood that these embodiments are offered by way of example only. For example, one skilled in the art will recognize that the functionality of logic circuit 23 could vary and the procedural steps could be varied in their order or number and remain within the scope of this disclosure. Accordingly, the present invention is not limited to a particular embodiment, but extends to various modifications that nevertheless fall within the scope of the appended claims.

## Claims

1. A mobile computing device (10) comprising:
a transceiver circuit (24) configured to communicate with a wireless network;
memory (36) configured to store a wireless network coverage data and a geographic data;
a location determination circuit (38) configured to provide a location data for the mobile computing device; and
a processing circuit (20) configured to determine that the mobile computing device is proximate to an area of no wireless network coverage and to download via the transceiver circuit additional geographic data associated with the area of no wireless network coverage based on the determination, wherein the processing circuit is configured to determine that a destination location is in an area of no wireless network coverage, and wherein the processing circuit is adapted to download via the transceiver circuit a first map data (78) associated with a route to the destination location and a second map data (66) associated with the area of no wireless network coverage from a remote source, and wherein the first map data is utilised to provide navigational assistance while the mobile computing device is within the wireless network coverage area and the second map data is utilised to provide navigational assistance while the mobile computing device is outside the wireless network coverage area.

2. The mobile computing device of claim 1, wherein the processing circuit is configured to determine the mobile computing device being proximate to the area of no wireless network coverage based on the wireless network coverage data and the location data.

3. The mobile computing device of claim 1 or 2, wherein the additional geographic data comprises at least one point of interest information; and/or
wherein the geographic data comprises at least one street data for a geographic area and the street data is configured to include at least one lower level of street data for the geographic area.

4. The mobile computing device of any preceding claim, wherein the location determination circuit is configured to provide the location data based on a position data received from the wireless network.

5. The mobile computing device of any preceding claim, wherein the processing circuit is configured to determine the mobile computing device is proximate to the area of no wireless network coverage based on a course prediction which is configured to be based on at least one past location data; and/or
wherein the processing circuit is configured to determine that the mobile computing device is proximate to the area of no wireless network coverage based on a wireless network signal strength; and/or
wherein the location determination circuit is configured to provide the location data based on a local global positioning system receiver.

6. The mobile computing device of any preceding claim, wherein the transceiver is configured to communicate with a cellular wireless network.

7. The mobile computing device of any preceding claim, wherein the additional geographic data is determined via a logic circuit.

8. The mobile computing device of any preceding claim wherein the mobile computing device is proximate to a wireless network coverage area boundary line.

9. A method for navigation, comprising:
determining, (200) by a mobile computing device, a mobile computing device location;
determining, (202) by the mobile computing device, a destination location;
determining, (204) by the mobile computing device, that the destination location is in an area of no wireless network coverage;
downloading, (206) by the mobile computing device, a first map data (78) associated with a route to the destination location and a second map data (66) associated with the area of no wireless network coverage from a remote source, and wherein the first map data (78) is utilized to provide navigational assistance while the mobile computing device is within a wireless network coverage area and the second map data (66) is utilized to provide navigational assistance while the mobile computing device is outside the wireless network coverage area.

10. The method for navigation of claim 9, wherein the downloading of the first map data (78) and the second map data (66) is based on a logic circuit; and/or
wherein the mobile computing device downloads at least one point of interest from the remote source.

11. A computer program comprising computer or machine readable program elements operative to configure a mobile computing device to operate as the mobile computing device in accordance with any of claims 1 to 8, or implement a method according to any of claims 9 or 10 when executed.

12. A computer program carrier medium carrying a computer program according to claim 11.

## Patentansprüche

1. Mobiles Computergerät (10), das Folgendes umfasst:
eine Transceiver-Schaltung (24), die so konfiguriert ist, dass sie mit einem drahtlosen Netzwerk kommuniziert,
Speicher (36), der so konfiguriert ist, dass er Daten zur Abdeckung durch ein drahtloses Netzwerk und geografische Daten speichert,
eine Standortbestimmungsschaltung (38), die so konfiguriert ist, dass sie eine Standortangabe für das mobile Computergerät bereitstellt, und
eine Verarbeitungsschaltung (20), die so konfiguriert ist, dass sie ermittelt, dass sich das mobile Computergerät in der Nähe eines Bereichs ohne Abdeckung durch ein drahtloses Netzwerk befindet, und auf der Grundlage der Ermittlung über die Transceiver-Schaltung zusätzliche geografische Daten herunterlädt, die mit dem Bereich ohne Abdeckung durch ein drahtloses Netzwerk verknüpft sind, wobei die Verarbeitungsschaltung so konfiguriert ist, dass sie ermittelt, dass sich ein Zielstandort in einem Bereich ohne Abdeckung durch ein drahtloses Netzwerk befindet, und die Verarbeitungsschaltung so ausgelegt ist, dass sie über die Transceiver-Schaltung erste Kartendaten (78), die mit einer Route zum Zielstandort verknüpft sind, und zweite Kartendaten (66), die mit dem Bereich ohne Abdeckung durch ein drahtloses Netzwerk verknüpft sind, von einer entfernt gelegenen Quelle herunterlädt, und die ersten Kartendaten zum Bereitstellen von Unterstützung bei der Navigation benutzt werden, wenn sich das mobile Computergerät in dem Bereich mit Abdeckung durch ein drahtloses Netzwerk befindet, und die zweiten Kartendaten zum Bereitstellen von Unterstützung bei der Navigation benutzt werden, wenn sich das mobile Computergerät außerhalb des Bereichs mit Abdeckung durch ein drahtloses Netzwerk befindet.

2. Mobiles Computergerät nach Anspruch 1, wobei die Verarbeitungsschaltung so konfiguriert ist, dass sie auf der Grundlage der Daten zur Abdeckung durch ein drahtloses Netzwerk und der Standortangaben ermittelt, dass sich das mobile Computergerät in der Nähe des Bereichs ohne Abdeckung durch ein drahtloses Netzwerk befindet.

3. Mobiles Computergerät nach Anspruch 1 oder 2, wobei die zusätzlichen geografischen Daten mindestens eine Information zu einem Point of Interest umfassen und/oder
wobei die geografischen Daten mindestens eine Straßenangabe für einen geografischen Bereich umfassen und die Straßenangabe so konfiguriert ist, dass sie mindestens eine niedrigere Ebene von Straßenangaben für den geografischen Bereich enthält.

4. Mobiles Computergerät nach einem der vorhergehenden Ansprüche, wobei die Standortbestimmungsschaltung so konfiguriert ist, dass sie die Standortangabe auf der Grundlage einer aus dem drahtlosen Netzwerk empfangenen Positionsangabe bereitstellt.

5. Mobiles Computergerät nach einem der vorhergehenden Ansprüche, wobei die Verarbeitungsschaltung so konfiguriert ist, dass sie auf der Grundlage einer Kursprognose, die so konfiguriert ist, dass sie auf mindestens einer früheren Standortangabe beruht, ermittelt, dass sich das mobile Computergerät in der Nähe des Bereichs ohne Abdeckung durch ein drahtloses Netzwerk befindet, und/oder wobei die Verarbeitungsschaltung so konfiguriert ist, dass sie auf der Grundlage einer Signalstärke eines drahtlosen Netzwerks ermittelt, dass sich das mobile Computergerät in der Nähe des Bereichs ohne Abdeckung durch ein drahtloses Netzwerk befindet, und/oder
wobei die Standortbestimmungsschaltung so konfiguriert ist, dass sie die Standortangabe auf der Grundlage eines örtlichen GPS-Empfängers bereitstellt.

6. Mobiles Computergerät nach einem der vorhergehenden Ansprüche, wobei der Transceiver so konfiguriert ist, dass er mit einem Mobilfunknetz kommuniziert.

7. Mobiles Computergerät nach einem der vorhergehenden Ansprüche, wobei die zusätzlichen geografischen Daten über eine Logikschaltung ermittelt werden.

8. Mobiles Computergerät nach einem der vorhergehenden Ansprüche, wobei sich das mobile Computergerät in der Nähe einer Grenzlinie eines Bereichs mit Abdeckung durch ein drahtloses Netzwerk befindet.

9. Navigationsverfahren, das Folgendes umfasst:
Ermitteln (200) eines Standorts eines mobilen Computergeräts durch ein mobiles Computergerät,
Ermitteln (202) eines Zielstandorts durch das mobile Computergerät,
Ermitteln (204), dass sich der Zielstandort in einem Bereich ohne Abdeckung durch ein drahtloses Netzwerk befindet, durch das mobile Computergerät,
Herunterladen (206) erster Kartendaten (78), die mit einer Route zum Zielstandort verknüpft sind, und zweiter Kartendaten (66), die mit dem Bereich ohne Abdeckung durch ein drahtloses Netzwerk verknüpft sind, von einer entfernt gelegenen Quelle durch das mobile Computergerät, und wobei die ersten Kartendaten (78) zum Bereitstellen von Unterstützung bei der Navigation benutzt werden, wenn sich das mobile Computergerät in einem Bereich mit Abdeckung durch ein drahtloses Netzwerk befindet, und die zweiten Kartendaten (66) zum Bereitstellen von Unterstützung bei der Navigation benutzt werden, wenn sich das mobile Computergerät außerhalb des Bereichs mit Abdeckung durch ein drahtloses Netzwerk befindet.

10. Navigationsverfahren nach Anspruch 9, wobei das Herunterladen der ersten Kartendaten (78) und der zweiten Kartendaten (66) auf einer Logikschaltung beruht und/oder
wobei das mobile Computergerät mindestens einen Point of Interest von der entfernt gelegenen Quelle herunterlädt.

11. Computerprogramm mit computer- oder maschinenlesbaren Programmelementen, die dazu dienen, ein mobiles Computergerät so zu konfigurieren, dass es als mobiles Computergerät nach einem der Ansprüche 1 bis 8 arbeitet, oder bei Ausführung ein Verfahren nach einem der Ansprüche 9 und 10 zu implementieren.

12. Computerprogrammträgermedium, das ein Computerprogramm nach Anspruch 11 trägt.

## Revendications

1. Un dispositif informatique mobile (10) comprenant :
un circuit d'émetteur-récepteur (24) configuré de façon à communiquer avec un réseau sans fil,
une mémoire (36) configurée de façon à conserver en mémoire des données de couverture de réseau sans fil et des données géographiques,
un circuit de détermination d'emplacement (38) configuré de façon à fournir des données d'emplacement destinées au dispositif informatique mobile, et
un circuit de traitement (20) configuré de façon à déterminer que le dispositif informatique mobile se trouve à proximité d'une zone sans couverture de réseau sans fil et à télécharger par l'intermédiaire du circuit d'émetteur-récepteur des données géographiques additionnelles associées à la zone sans couverture de réseau sans fil en fonction de la détermination, où le circuit de traitement est configuré de façon à déterminer qu'un emplacement de destination se situe dans une zone sans couverture de réseau sans fil, et où le circuit de traitement est adapté de façon à télécharger par l'intermédiaire du circuit d'émetteur-récepteur des premières données cartographiques (78) associées à un itinéraire vers l'emplacement de destination et des deuxièmes données cartographiques (66) associées à la zone sans couverture de réseau sans fil à partir d'une source distante, et où les premières données cartographiques sont utilisées de façon à fournir une assistance de navigation pendant que le dispositif informatique mobile se trouve à l'intérieur de la zone de couverture du réseau sans fil et les deuxièmes données cartographiques sont utilisées de façon à fournir une assistance de navigation pendant que le dispositif informatique mobile se trouve à l'extérieur de la zone de couverture du réseau sans fil.

2. Le dispositif informatique mobile selon la Revendication 1, où le circuit de traitement est configuré de façon à déterminer que le dispositif informatique mobile se trouve à proximité de la zone sans couverture de réseau sans fil en fonction des données de couverture de réseau sans fil et des données d'emplacement.

3. Le dispositif informatique mobile selon la Revendication 1 ou 2, où les données géographiques additionnelles comprennent au moins des informations d'un point d'intérêt, et/ou
où les données géographiques comprennent au moins des données de rues pour une zone géographique et les données de rues sont configurées de façon à inclure au moins un niveau inférieur de données de rues pour la zone géographique.

4. Le dispositif informatique mobile selon l'une quelconque des Revendications précédentes, où le circuit de détermination d'emplacement est configuré de façon à fournir les données d'emplacement en fonction de données de position reçues à partir du réseau sans fil.

5. Le dispositif informatique mobile selon l'une quelconque des Revendications précédentes, où le circuit de traitement est configuré de façon à déterminer que le dispositif informatique mobile se trouve à proximité de la zone sans couverture de réseau sans fil en fonction d'une prédiction de trajet qui est configurée de façon à être basée sur au moins des données d'emplacement passées, et/ou
où le circuit de traitement est configuré de façon à déterminer que le dispositif informatique mobile se trouve à proximité de la zone sans couverture de réseau sans fil en fonction d'une intensité de signal de réseau sans fil, et/ou
où le circuit de détermination d'emplacement est configuré de façon à fournir les données d'emplacement en fonction d'un récepteur de système de géopositionnement local.

6. Le dispositif informatique mobile selon l'une quelconque des Revendications précédentes, où l'émetteur-récepteur est configuré de façon à communiquer avec un réseau sans fil cellulaire.

7. Le dispositif informatique mobile selon l'une quelconque des Revendications précédentes, où les données géographiques additionnelles sont déterminées par l'intermédiaire d'un circuit logique.

8. Le dispositif informatique mobile selon l'une quelconque des Revendications précédentes où le dispositif informatique mobile se trouve à proximité d'une ligne de démarcation de zone de couverture de réseau sans fil.

9. Un procédé de navigation, comprenant :
la détermination (200), par un dispositif informatique mobile, d'un emplacement de dispositif informatique mobile,
la détermination (202), par le dispositif informatique mobile, d'un emplacement de destination,
la détermination (204), par le dispositif informatique mobile, que l'emplacement de destination se situe dans une zone sans couverture de réseau sans fil,
le téléchargement (206), par le dispositif informatique mobile, de premières données cartographiques (78) associées à un itinéraire vers l'emplacement de destination et de deuxièmes données cartographiques (66) associées à la zone sans couverture de réseau sans fil à partir d'une source distante, et où les premières données cartographiques (78) sont utilisées de façon à fournir une assistance de navigation pendant que le dispositif informatique mobile se trouve à l'intérieur d'une zone de couverture de réseau sans fil et les deuxièmes données cartographiques (66) sont utilisées de façon à fournir une assistance de navigation pendant que le dispositif informatique mobile se trouve à l'extérieur de la zone de couverture du réseau sans fil.

10. Le procédé de navigation selon la Revendication 9, où le téléchargement des premières données cartographiques (78) et des deuxièmes données cartographiques (66) est basé sur un circuit logique, et/ou
où le dispositif informatique mobile télécharge au moins un point d'intérêt à partir de la source distante.

11. Un programme informatique comprenant des éléments de programme lisibles par un ordinateur ou une machine conçus de façon à configurer un dispositif informatique mobile destiné à fonctionner en tant que le dispositif informatique mobile selon l'une quelconque des Revendications 1 à 8, ou à mettre en ouvre un procédé selon l'une quelconque des Revendications 9 ou 10 lorsqu'il est exécuté.

12. Un support de programme informatique contenant un programme informatique selon la Revendication 11.
